# EUROPEAN PATENT SPECIFICATION

(11) **EP 3 477 449 B1**
(45) Date of publication and mention of the grant of the patent: **12.08.2020**
(21) Application number: 17820392.3
(22) Date of filing: 12.04.2017
(51) Int. Cl.: G06F 3/048, G06F 3/147, G06F 3/0485, G06F 3/0488

(54) **ELECTRONIC DEVICE AND OPERATING METHOD THEREFOR**
ELEKTRONISCHE VORRICHTUNG UND BETRIEBSVERFAHREN DAFÜR
DISPOSITIF ÉLECTRONIQUE ET SON PROCÉDÉ DE FONCTIONNEMENT

(30) Priority: 30.06.2016 KR 20160082683
(43) Date of publication of application: 01.05.2019
(73) Proprietor: Samsung Electronics Co., Ltd., Suwon-si, Gyeonggi-do 16677 (KR)
(72) Inventor: LEE, Youngjay, Suwon-si Gyeonggi-do 16488 (KR); PARK, Joo Yeon, Seoul 06733 (KR); YOON, Kyoungsik, Seoul 05239 (KR); LEE, Hyunyeul, Seoul 06219 (KR); CHUNG, Seungyeon, Seoul 05095 (KR); LEE, Yohan, Seoul 04133 (KR)
(74) Representative: HGF
(86) International application number: PCT/KR2017/003826
(87) International publication number: WO 2018/004115

(56) References cited:
- EP-A1- 2 402 851
- EP-A1- 3 023 861
- KR-A- 20110 125 356
- KR-A- 20120 076 137
- KR-A- 20130 113 997
- KR-A- 20150 121 443
- US-A1- 2011 242 138
- US-A1- 2012 081 270
- US-A1- 2013 120 459
- US-A1- 2015 213 784
- US-A1- 2015 324 080

## Description

### Technical Field

Various embodiments relate to an electronic device and an operating method therefor.

### Background Art

In general, various functions are added to electronic devices and complex functions are performed thereat. For example, an electronic device may perform a mobile communication function, a data communication function, a data output function, a data storage function, an image photographing function, a voice recording function, or the like. Such an electronic device may be provided with a display and an input unit. In this case, the display and the input unit may be combined with each other to be implemented as a touch screen. In addition, the electronic device may execute and control a function through the touch screen.

EP3023861 A1 discloses an electronic device and a method of displaying a screen of the electronic device. The method includes detecting a user gesture for unlocking a sleep state, determining a screen display direction based on the detected user gesture, and displaying the screen based on the determined screen display direction.

### Detailed Description of the Invention

### Technical Objects

However, a user of the electronic device described above may have difficulty in operating the touch screen with one hand. This issue becomes more serious as the size of the touch screen becomes larger. Therefore, using efficiency and user convenience of the electronic device may be reduced.

### Technical Solving Means

The invention is defined by the independent claims. Further aspects of the invention are outlined in the dependent claims. When the term "embodiment" is used for describing an unclaimed combination of features, it has to be understood as referring to examples useful for understanding the present invention.

Also disclosed herein is an operating method of an electronic device , the method including: determining a first display facing a first direction and a second display disposed on a rear surface of the first display, based on a posture of the electronic device; detecting that a direction of the first display is changed from the first direction to a second direction, based on a motion of the electronic device; in response to the direction of the first display being changed from the first direction to the second direction, displaying a content on the second display.

Also disclosed herein is an electronic device including: a plurality of displays; a processor electrically connected with the displays; and a memory electrically connected with the processor, wherein, when being executed, the memory stores instructions that cause the processor to determine a first display facing a first direction and a second display disposed on a rear surface of the first display, based on a orientation of the electronic device, to detect that a direction of the first display is changed from the first direction to a second direction, based on a motion of the electronic device, and, in response to the direction of the first display being changed from the first direction to the second direction, to display a content on the second display.

### Advantageous Effect

According to various embodiments, a user of the electronic device can easily operate the electronic device with user's one hand. That is, the electronic device may activate the second display based on a motion of the electronic device, regardless of whether the first display is activated. In this case, the electronic device may display a content on the second display, such that the user of the electronic device can operate the electronic device without changing a grip area on the electronic device. To achieve this, the electronic device may determine a content for the second display, based on at least one of a content displayed on the first display or a position of the grip area. Accordingly, using efficiency and user convenience of the electronic device can be enhanced. The invention will be carried out according to the attached independent claims.

### Brief Description of the Drawings

FIG. 1 is a block diagram of an electronic device according to an embodiment;
FIGs. 2, 3, 4, and 5 are perspective views of an electronic device according to an embodiment;
FIG. 6 is an illustration of rotating an electronic device according to an embodiment;
FIG. 7 is a flowchart of a method of an electronic device according to an embodiment;
FIG. 8 is a flowchart of a method of determining a first display and a second display in FIG. 7;
FIG. 9 is a flowchart of a method of executing a function on the second display in FIG. 7;
FIG. 10 is a flowchart of a method of executing a function on the second display in FIG. 7;
FIG. 11 is a flowchart of a method of executing a function on the second display in FIG. 7; and
FIGs. 12, 13, 14, 15, and 16 are illustrations of examples of an operating method of an electronic device according to various embodiments.

### Best Mode for Embodying the Invention

Like reference numerals denote like components throughout the accompanying drawings. A singular expression includes a plural concept unless there is a contextually distinctive difference therebetween.

An electronic device according to various embodiments of the present disclosure, for example, may include at least one of a smartphone, a tablet personal computer (PC), a mobile phone, a video phone, an electronic book (e-book) reader, a desktop PC, a laptop PC, a netbook computer, a workstation, a server, a personal digital assistant (PDA), a portable multimedia player (PMP), a moving picture experts group audio layer 3 (MP3) player, a mobile medical appliance, a camera, and a wearable device (e.g., smart glasses, a head-mounted-device (HMD), electronic clothes, an electronic bracelet, an electronic necklace, an electronic appcessory, an electronic tattoo, a smart mirror, or a smart watch). The electronic device (e.g., a home appliance) may include at least one of, for example, a television, a digital video disk (DVD) player, an audio player, a refrigerator, an air conditioner, a vacuum cleaner, an oven, a microwave oven, a washing machine, an air cleaner, a set-top box, a home automation control panel, a security control panel, a TV box (e.g., Samsung HomeSync®, Apple TV®, or Google TVTM), a game console (e.g., Xbox® and PlayStation®), an electronic dictionary, an electronic key, a camcorder, and an electronic photo frame.

The electronic device may include at least one of various medical devices (e.g., various portable medical measuring devices (a blood glucose monitoring device, a heart rate monitoring device, a blood pressure measuring device, a thermometer, etc.), a magnetic resonance angiography (MRA) device, a magnetic resonance imaging (MRI) device, a computed tomography (CT) machine, and an ultrasonic machine), a navigation device, a global positioning system (GPS) receiver, an event data recorder (EDR), a flight data recorder (FDR), a vehicle infotainment device, an electronic device for a ship (e.g., a navigation device for a ship, and a gyro-compass), avionics, security devices, an automotive head unit, a robot for home or industry, an automated teller machine (ATM) in banks, a point of sales (POS) device in a shop, or an Internet of things (IoT) device (e.g., a light bulb, various sensors, an electric or gas meter, a sprinkler device, a fire alarm, a thermostat, a streetlamp, a toaster, sporting goods, a hot water tank, a heater, a boiler, etc.). According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device may be a combination of one or more of the aforementioned various devices. Hereinafter, an electronic device is described with reference to the accompanying drawings.

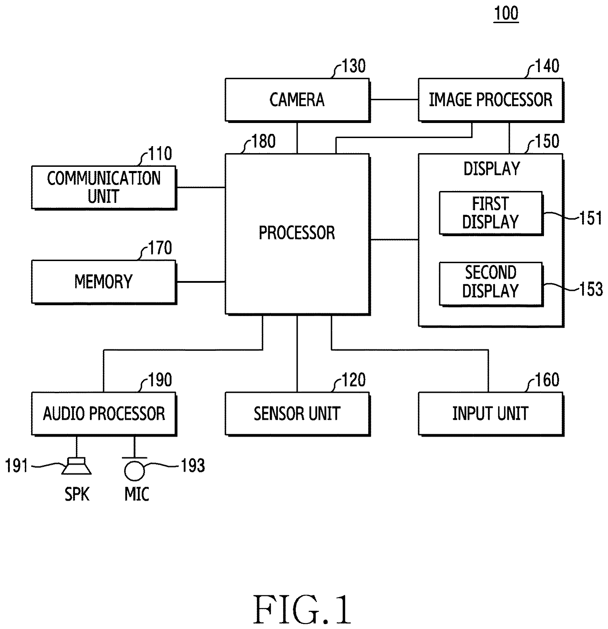

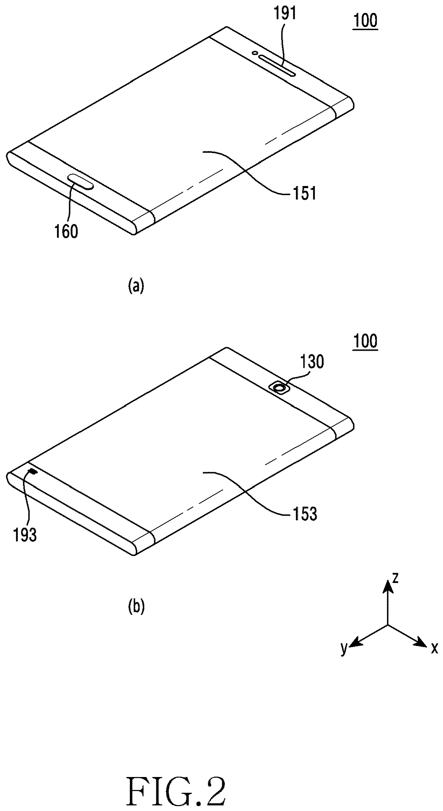

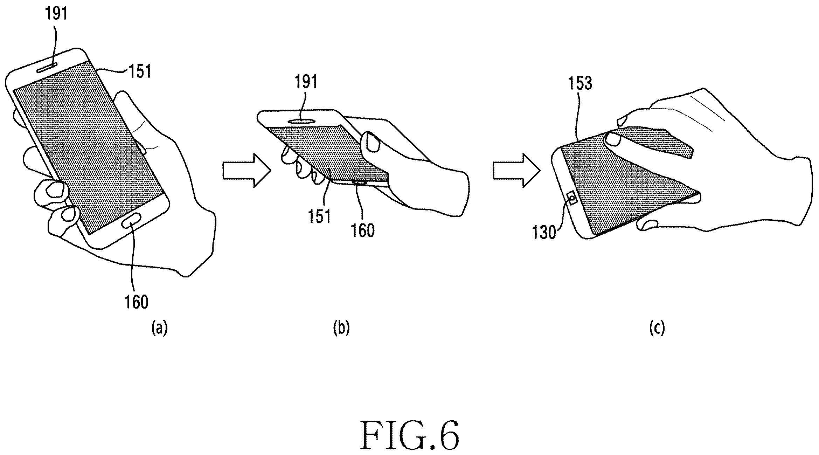

FIG. 1 is a block diagram illustrating an electronic device 100 according to an embodiment. In addition, FIGs. 2, 3, 4, and 5 are perspective views illustrating the electronic device 100 according to various embodiments. FIG. 6 is an illustration of an example of rotating the electronic device 100 according to an embodiment.

Referring to FIG. 1, the electronic device 100 may include a communication unit 110, a sensor unit 120, a camera 130, an image processor 140, a display 150, an input unit 160, a memory 170, a processor 180, and an audio processor 190.

The communication unit 110 may communicate at the electronic device 100. In this case, the communication unit 110 may communicate with an external device in various communication methods. For example, the communication unit 110 may communicate wiredly or wirelessly. To achieve this, the communication unit 110 may include at least one antenna. In addition, the communication unit 110 may access at least one of a mobile communication network or a data communication network. Alternatively, the communication unit 110 may perform short range communication. For example, the external device may include at least one of an electronic device, a base station, a server, or a satellite. In addition, the communication method may include long term evolution (LTE), wideband code division multiple access (WCDMA), global system for mobile communications (GSM), wireless fidelity (WiFi), wireless local area network (LNA), ultrasonic, Bluetooth, an integrated circuit (IC) or chip, and near field communication (NFC).

The sensor unit 120 may measure an ambient physical quantity of the electronic device 100. Alternatively, the sensor unit 120 may detect a state of the electronic device 100. That is, the sensor unit 120 may detect a physical signal. In addition, the sensor unit 120 may convert a physical signal into an electrical signal. The sensor unit 120 may include at least one sensor. For example, the sensor unit 120 may include at least one of a gesture sensor, a gyro sensor, a barometer, a magnetic sensor, an acceleration sensor, a grip sensor, a proximity sensor, a color sensor, a medical sensor, a temperature-humidity sensor, an illuminance sensor, and an ultraviolet (UV) sensor.

The camera 130 may generate image data at the electronic device 100. To achieve this, the camera 130 may receive an optical signal. In addition, the camera 130 may generate image data from the optical signal. Herein, the camera 130 may include a camera sensor and a signal converter. The camera sensor may convert an optical signal into an electrical image signal. The signal converter may convert an analogue image signal into digital image data.

The image processor 140 may process image data at the electronic device 100. In this case, the image processor 140 may process image data on a frame basis, and may output the image data according to a characteristic and a size of the display 150. Herein, the image processor 140 may compress image data in a predetermined method, or may restore compressed image data to original image data.

The display 150 may output display data at the electronic device 100. For example, the display 150 may include a liquid crystal display (LCD), a light emitting diode (LED) display, an organic LED (OLED) display, an active matrix LED (AMOLED) display, a micro electro mechanical system (MEMS), and an electronic paper display.

The display 150 may include a plurality of displays, for example, a first display 151 and a second display 153. In this case, the rear surface of the first display 151 and the rear surface of the second display 153 may face each other. In addition, the first display 151 and the second display 153 may be tilted from each other. For example, the first display 151 and the second display 153 may be parallel to each other. In addition, the display 150 may be a flexible display. For example, the first display 151 and the second display 153 may include respective main areas. At least one of the first display 151 or the second display 153 may further include at least one edge area. Each edge area may be extended from any one of corners of the main area.

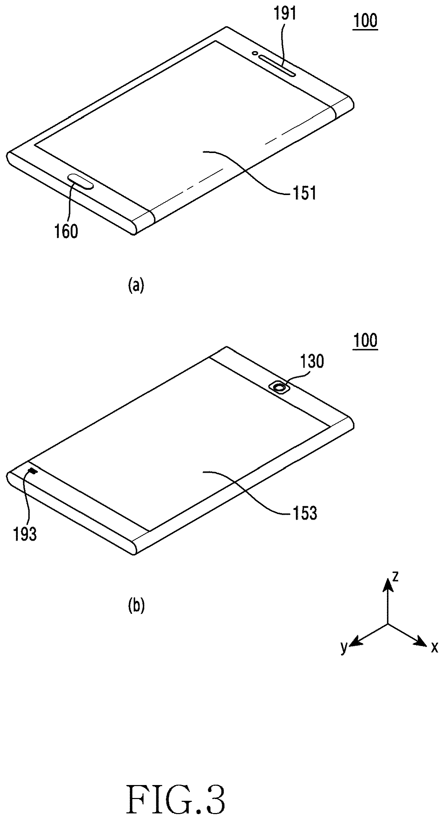

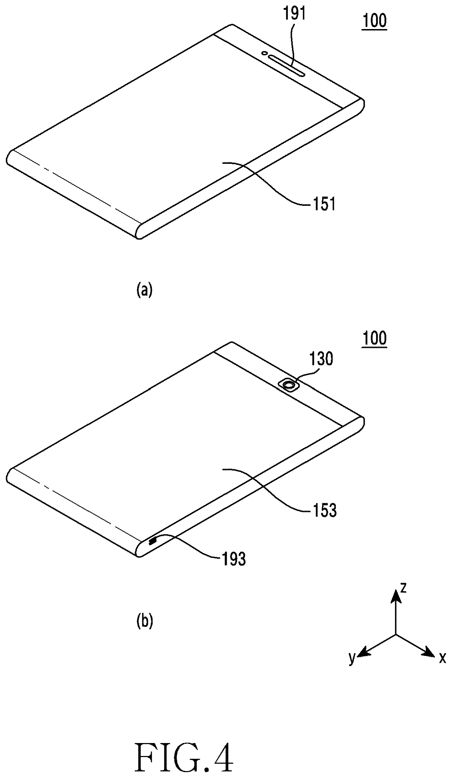

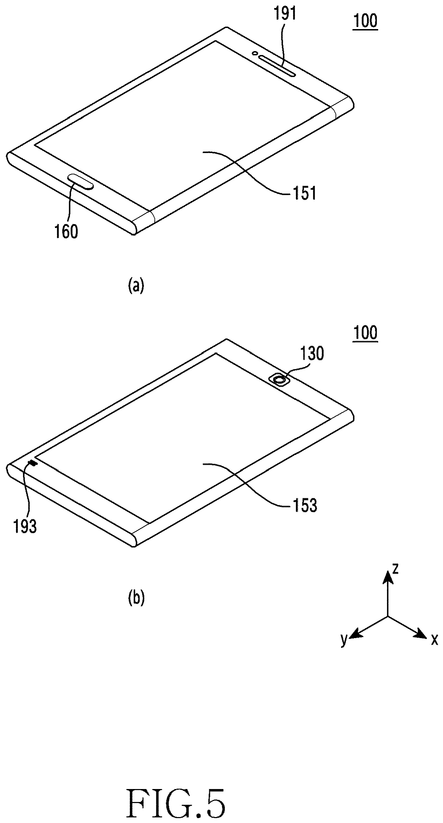

The first display 151 and the second display 153 may be coupled to each other on both of their side borders facing each other as shown in FIG. 2. According to another embodiment, the first display 151 and the second display 153 may be coupled to each other on one of their side borders as shown in FIG. 3 or FIG. 4. For example, an edge area of the first display 151 and an edge area of the second display 153 may be coupled to each other. In still another embodiment, the first display 151 and the second display 153 may be decoupled from each other as shown in FIG. 5. In this case, the first display 151 may be disposed on the same plane as that of a speaker 191 in the electronic device 100, and the second display 153 may be disposed on the same plane as that of the camera 130 in the electronic device 100. However, this should not be considered as limiting. For example, the position of the first display 151 and the position of the second display 153 are not limited to specific surfaces in the electronic device 100.

The input unit 160 may generate input data at the electronic device 100. In this case, the input unit 160 may include at least one inputting means. For example, the input unit 160 may include at least one of a key pad, a dome switch, a physical button, a touch panel, or a jog and shuttle. In addition, the input unit 160 may be combined with the display 150 to be implemented as a touch screen.

The memory 170 may store operating programs of the electronic device 100. According to various embodiments, the memory 170 may store programs for controlling the display 150 based on a rotation of the electronic device 100. In addition, the memory 170 may store data which is generated while programs are being performed. In addition, the memory 170 may store instructions for operations of the processor 180. For example, the memory 170 may include at least one of an internal memory or an external memory. The internal memory may include at least one of a volatile memory (for example, a dynamic random access memory (DRAM), a static RAM (SRAM), or a synchronous dynamic RAM (SDRAM)), a nonvolatile memory (for example, an one time programmable read only memory (OTPROM), a PROM, an erasable PROM (EPROM), an electrically erasable PROM (EEPROM), a mask ROM, a flash ROM, a flash memory, a hard driver, or a solid state drive (SSD)). The external memory may include at least one of a flash drive, a compact flash (CF), a secure digital (SD) card, a micro-SD card, a mini-SD card, an extreme digital (xD) card, a multi-media card (MMC), or a memory stick.

The processor 180 may control an overall operation at the electronic device 100. In this case, the processor 180 may receive instructions from the memory 170. That is, the processor 180 may control elements of the electronic device 100. By doing so, the processor 180 may perform various functions.

The processor 180 may control the display 150 based on a motion of the electronic device 100. In this case, the processor 180 may determine the first display 151 and the second display 153 at the display 150. In addition, the processor 180 may detect a motion (for example, a rotation) of the electronic device 100. For example, the electronic device 100 may be rotated by a user as shown in FIG. 6. Accordingly, a direction and/or a posture of the electronic device 100 may be changed. The orientation of the electronic device 100 may be determined based a tilt angle of the electronic device 100 with respect to a plane parallel to the ground. In this case, a grip area of the user on the electronic device 100 may be determined. In addition, the grip area of the user on the electronic device 100 may be maintained even when the electronic device 100 is rotated. For example, the grip area of the user on the electronic device 100 may be determined in the main area of the second display 153. In addition, the grip area of the user on the electronic device 100 may be determined on at least one of the edge area of the first display 151 or the edge area of the second display 153.

The processor 180 may determine the first display 151 and the second display 153 by using the sensor unit 120. In this case, the processor 180 may determine one display as the first display 151 and may determine another display as the second display 153 according to directions of the plurality of displays included in the electronic device 100. For example, the processor 180 may determine a display facing a first direction from among the plurality of displays as the first display 151, and may determine a display facing a second direction as the second display 153. The first direction may be a direction facing a user, and the second direction may be a direction opposite the first direction. The processor 180 may also determine the first display 151 according to a tilt angle of the first display 151 from the plane parallel to the ground. The processor 180 may further determine the first display 151 and the second display 153 by using the input unit 160. In this case, the processor 180 may determine the first display 151 with reference to a user input. For example, the processor 180 may determine the first display 151 according to an activation event. Alternatively, the processor 180 may determine the first display 151 based on a user's grip area on the electronic device 100. For example, the processor 180 may determine the first display 151, based on at least one of a structure, a shape, or a size of the grip area on the first display 151 and the second display 153. The processor 180 may determine the first display 151 by using the camera 130. In this case, the processor 180 may determine the first display 151 facing the user by recognizing the user in an image received through the camera 130.

The processor 180 may detect a motion (for example, a rotation) of the electronic device 100 by using the sensor unit 120. For example, the processor 180 may detect that the direction of the second display 153 is changed from the second direction to the first direction, based on a motion of the electronic device 100, and accordingly, may detect that the electronic device 100 is rotated. In another example, the processor 180 may detect that the electronic device 100 is rotated, according to a change in the tilt angle of the second display 153 from the plane parallel to the ground, caused by a motion of the electronic device 100. The rotation of the electronic device 100 may be interchangeably used with the term "flip." Herein, a flip may be determined based on a direction and a posture of the first display 151, a direction and a posture of the second display 153, and a motion speed of the electronic device 100. For example, a flip may indicate that the direction of the first display 151 is changed from a first direction to a second direction, and the direction of the second display 153 is changed from the second direction to the first direction, for example, the first display 151 and the second display 153 are reversed. For example, a change from a state in which the direction of the first display 151 faces a user and the direction of the second display 153 faces the ground to a state in which the direction of the first display 151 faces the ground and the direction of the second display 153 faces the user, caused by a motion of the electronic device 100, may be referred to as a flip and/or reversal. According to an embodiment, the flip and/or reversal may indicate that a value indicating the directions of the first display 151 and the second display 153 are changed by more than a threshold value. For example, the flip and/or reversal may include a case in which the directions of the first display 151 and the second display 153 are changed to the opposite directions (for example, by 180 degrees), and a case in which the directions of the first display 151 and the second display 153 are changed by more than a threshold value. The processor 180 may detect a motion (for example, a rotation) of the electronic device 100 by using the input unit 150. In this case, the processor 180 may detect a rotation of the electronic device 100 with reference to a user input. The processor 180 may detect a motion (for example, a rotation) of the electronic device 100 by using the camera 130. In this case, the processor 180 may detect the rotation of the electronic device 100 by recognizing a user in an image received through the camera 130 and determining the second display 153 facing the user.

In addition, the processor 180 may display a content on the second display 153 in response to the motion (for example, the rotation) of the electronic device 100. In this case, a display type of the first display 151 and a display type of the second display 153 may be different from each other. The display type of the first display 151 may include at least one of a display direction with reference to the first display 151 or a size of a display area on the first display 151. The display type of the second display 153 may include at least one of a display direction with reference to the second display 153 or a size of a display area on the second display 153. For example, the display direction of the first display 151 may be parallel with the first display 151, and the display direction of the second display 153 may be perpendicular to the second display 153. Accordingly, the display direction of the first display 151 and the display direction of the second display 153 may be orthogonal to each other. The size of the display area of the first display 151 may be greater than or equal to the size of the display area of the second display 153. For example, the processor 180 may determine the size of the display area for displaying a content on the second display 153 to be less than or equal to the size of the display area for displaying a content on the first display 153. In this case, a position of the display area on the second display 153 may be pre-set. Alternatively, the processor 180 may determine a display area in the other area except for a grip area from the second display 153. Alternatively, a content displayed on the second display 153 may be associated with a content displayed on the first display 151. For example, the content displayed on the second display 153 may be a content including at least one same data as the content displayed on the first display 151, a content already mapped onto the content displayed on the first display 151, a content including data associated with the content displayed on the first display 151, or a content including at least one function from among functions executable by the content displayed on the first display 151.

In addition, the processor 180 may display an area that is controllable by a user input, while displaying a content on the second display 153 in response to a motion (for example, a rotation) of the electronic device 100. For example, the processor 180 may display a content on the second display 153 according to detection of a rotation of the electronic device 100, and may display a controllable area for the displayed content, such that the user may recognize that the displayed area is controllable by a user input.

In addition, the processor 180 may control a content to be displayed on the other display 151, 153, based on a user input on a content displayed on one display of the first display 151 and the second display 153, in response to a motion (for example, a rotation) of the electronic device 100. For example, when the rotation of the electronic device 100 is detected after a user input on a content displayed on the second display 153 is detected, the processor 180 may display, on the first display 151, a content including the result of the user input on the content displayed on the second display 153.

In addition, the processor 180 may control an activation state of the first display 151 and/or the second display 153, in response to a motion (for example, a rotation) of the electronic device 100. For example, the processor 180 may deactivate the first display 151 and may activate the second display 153 according to the detection of the rotation of the electronic device 100. In addition, the processor 180 may activate the first display 151 and may deactivate the second display 153 according to the detection of the rotation of the electronic device 100.

The audio processor 190 may process an audio signal at the electronic device 100. In this case, the audio processor 190 may include the speaker 191 (SPK) and a microphone 193 (MIC). For example, the audio processor 190 may reproduce an audio signal through the speaker 191. In addition, the audio processor 190 may collect an audio signal through the microphone 193.

The electronic device 100 may include the plurality of displays (e.g., the first 151, the second 153, the processor 180 electrically connected to the first display 151, the second display 153, and the memory 170 electrically connected with the processor 180.

When being executed, the memory 170 may store instructions that cause the processor 180 to determine the first display 151 facing a first direction and the second display 153 disposed on a rear surface of the first display 151, based on an orientation of the electronic device 100, to detect that the direction of the first display 151 is changed from the first direction to a second direction, based on a motion of the electronic device 100, and, in response to the direction of the first display 151 being changed from the first direction to the second direction, to display a content on the second display 153.

A content display type of the first display 151 and a content display type of the second display 153 may be different from each other.

The memory 170 may include instructions that determine a portion of the second display 153 as a grip area, and determine the other area except for the grip area on the second display 153 as a display area for displaying the content.

The memory 170 may include instructions that control to identify a first content displayed on the first display 151, and to display, on the second display 153, a second content associated with the first content displayed on the first display 151.

The memory 170 may include instructions that detect a grip area from an edge of at least one of the first display 151 or the second display 153 during a motion of the electronic device, and determine a content to be displayed on the second display based on a position of the grip area.

The memory 170 may include instructions that determine whether the grip area corresponds to a pre-defined area of at least one of the first display 151 or the second display 153, and, when the grip area corresponds to the pre-defined area, determine a content corresponding to a function assigned to the pre-defined area as a content to be displayed on the second display 153.

The memory 170 may include instructions that control to detect a notification event, to determine a first content to be displayed on the first display 151 based on the notification event, and to display the first content on the first display 151.

The memory 170 may include instructions that control to display any one of superordinate items of pre-set functions on the second display 153, detect a user input for scrolling the superordinate items, and scroll the superordinate items based on the user input and display another item of the superordinate items on the second display 153.

The memory 170 may include instructions that control to detect a user input for displaying subordinate items of the displayed superordinate item, display any one of the subordinate items on the second display 153, detect a user input for scrolling the subordinate items, and scroll the subordinate items based on the user input and display another item of the subordinate items on the second display 153.

The memory may include instructions that control to detect a user input regarding the content displayed on the second display 153, detect that the direction of the first display 151 is changed from a second direction to a first direction based on a motion of the electronic device, and, in response to the direction of the first display 151 being changed from the second direction to the first direction, display, on the first display 151, a content indicating a result of the user input regarding the content displayed on the second display 153.

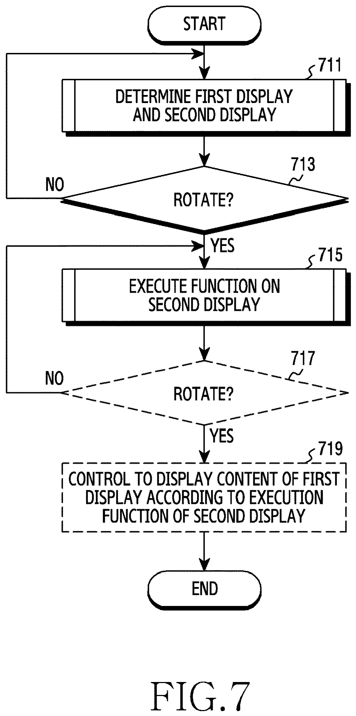

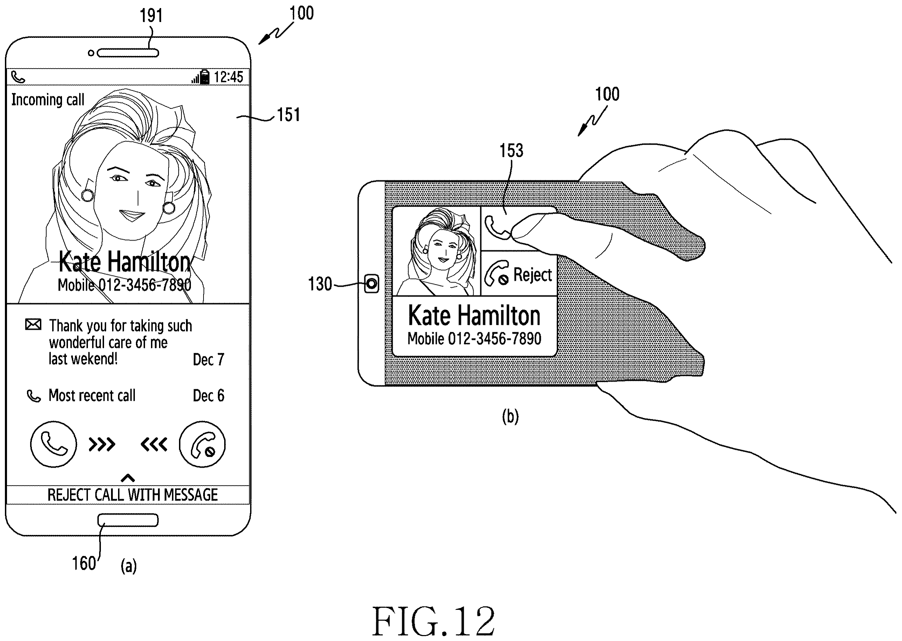

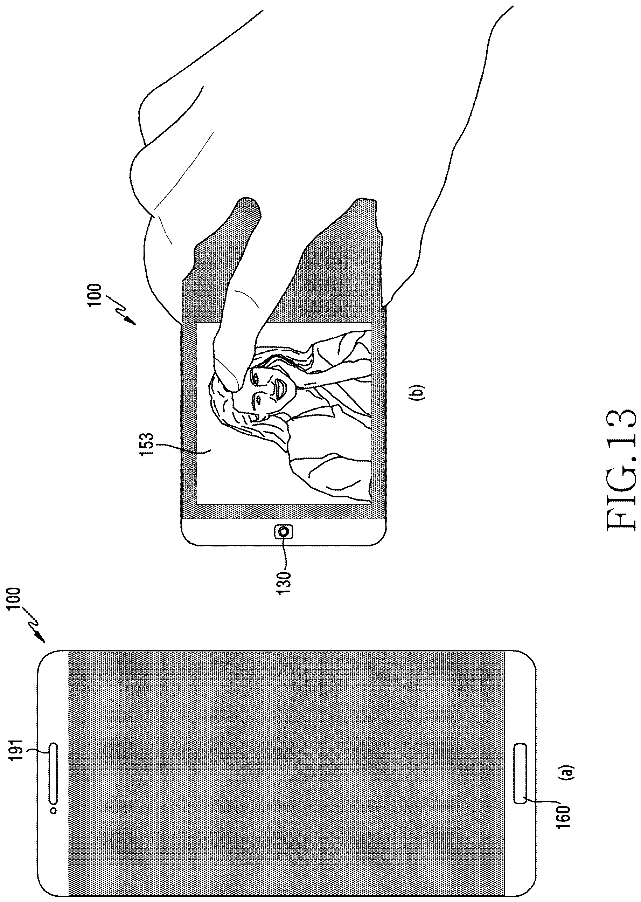

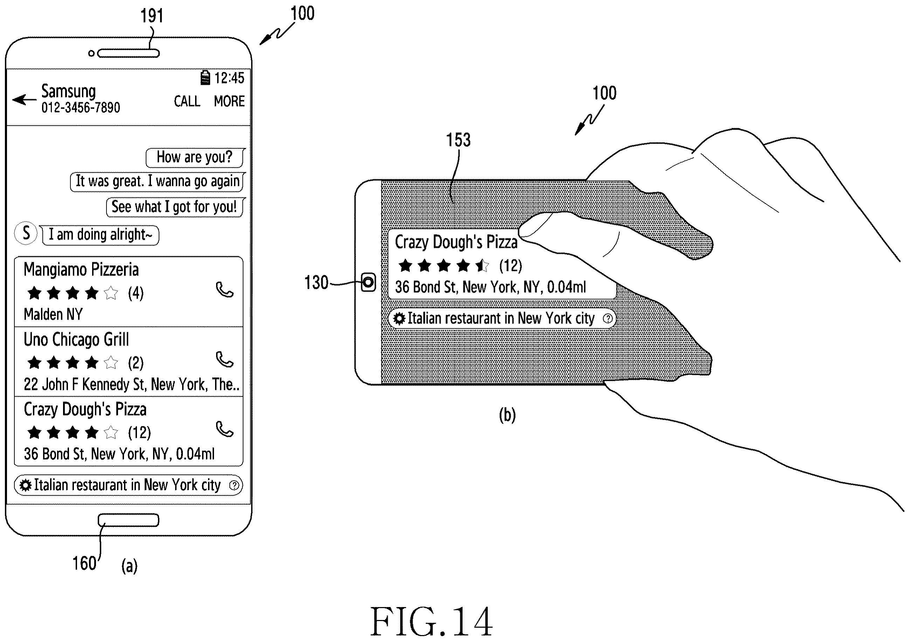

A user of the electronic device 100 may easily operate the electronic device 100 with one hand. For example, the processor 180 may activate the second display 153 based on the rotation of the electronic device 100, regardless of whether the first display 151 is activated or not. In this case, the processor 180 may display a content on the second display 153, such that the user of the electronic device 100 can operate the electronic device 100 without changing a grip area on the electronic device 100. To achieve this, the processor 180 may determine a content for the second display 153, based on at least one of a content displayed on the first display 151 or a position of the grip area. Accordingly, use efficiency and user convenience of the electronic device 100 may be enhanced. FIG. 7 is a flowchart of a method of the electronic device 100 according to various embodiments. Referring to FIG. 7, operations illustrated by dashed lines may be omitted. In addition, FIGs. 12, 13, 14, 15, and 16 are views illustrating examples of the method of the electronic device 100. The method of the electronic device 100 may start from operation 711 in which the processor 180 determines the first display 151 and the second display 153 from the display 150. In this case, the first display 151 may be in an activation state. For example, the first display 151 may be in an activation state as shown in FIG. 12 panel (a) or FIG. 14 panel (a). In this case, the first display 151 may display a background screen or a content of a certain function under control of the processor 180. Alternatively, the first display 151 may be in a deactivated state. For example, the first display 151 may be in a deactivated state as shown in FIG. 13 panel (a). According to an embodiment, the processor 180 may detect a direction and/or an orientation of the electronic device 100 by using the sensor unit 120, and may determine the first display 151 and the second display 153 based on the detected direction and/or posture. For example, the processor 180 may determine one display as the first display 151 and another display as the second display 153 according to directions of the plurality of displays. For example, the processor 180 may determine a display facing a first direction from among the plurality of displays as the first display 151, and may determine a display facing a second direction as the second display 153. The first direction may be a direction facing a user, and the second direction may be a direction opposite the first direction. In another example, the processor 180 may determine the first display 151 according to a tilt angle of the first display 151 from the plane parallel to the ground. The processor 180 may determine the first display 151 and the second display 153 by using the input unit 160. In this case, the processor 180 may determine the first display 151 with reference to a user input. For example, the processor 180 may determine the first display 151 according to an activation event. Alternatively, the processor 180 may determine the first display 151 based on a user's grip area on the electronic device 100. For example, the processor 180 may determine the first display 151, based on at least one of a structure, a shape, or a size of the grip area on the first display 151 and the second display 153. The processor 180 may determine the first display 151 by using the camera 130. In this case, the processor 180 may determine the first display 151 facing the user by recognizing the user in an image received through the camera 130.

The processor 180 may determine a user's grip area on at least one of the first display 151 or the second display 153. For example, the processor 180 may detect a contact with a user on at least one of the first display 151 or the second display 153, and may determine a grip area based on the contact. In this case, the processor 180 may determine the grip area in the main area of the second display 153. In addition, the processor 180 may determine the grip area on at least one of an edge area of the first display 151 or an edge area of the second display 153. There may exist a function setting area assigned a pre-set function in a pre-set position of at least one of the first display 151 or the second display 153.

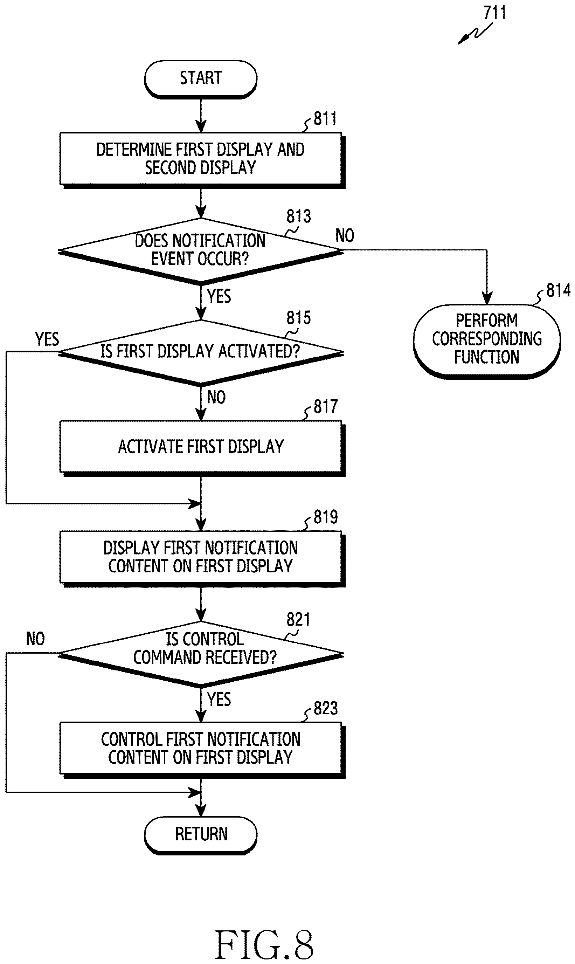

FIG. 8 is a flowchart of a method of determining the first display 151 and the second display 153 in step 711 in FIG. 7.

Referring to FIG. 8, the processor 180 may determine the first display 151 and the second display 153 in operation 811. The processor 180 may determine the first display 151 and the second display 153 based on a motion of the electronic device 100. The processor 180 may determine the first display 151 and the second display 153, based on at least one of a direction or a posture of the display 150, activation/deactivation, a structure, a shape, or size of a grip area, or an image received through the camera 130.

The processor 180 may detect whether a notification event occurs in operation 813. Herein, the notification event may include a communication event and a schedule event. For example, the communication event may occur in response to a call, a message, or power being received. The schedule event may occur in response to a schedule or alarm time arriving.

In operation 815, the processor 180 may determine whether the first display 151 is activated in response to the occurrence of the notification event being detected. In this case, when it is determined that the first display 151 is deactivated in operation 815, the processor 180 may activate the first display 151 in operation 817. When it is determined that the first display 151 is activated in operation 815, the processor 180 may maintain the activated first display 151.

In operation 819, the processor 180 may display a first notification content on the first display 151. In this case, the first notification content is a content corresponding to the notification event and may be expressed as a first display screen for the first display 151. The processor 180 may display the first notification content on the first display 151 as the first display screen as shown in FIG. 12 panel (a). Herein, the first display screen may include at least one control button assigned at least one control command for controlling the first notification content. For example, the control button may include at least one of an accept button to accept a call connection request or a reject button to reject the call connection request. In this case, the user of the electronic device 100 may have difficulty in selecting the control button without changing the grip area on the electronic device 100.

The processor 180 may detect whether a control command is received in operation 821. When the control command is received, the processor 180 may control the first notification content on the first display 151 in operation 823. For example, when the control button on the first display screen is selected, the processor 180 may control the first notification content based on the control command assigned to the control button. For example, when the accept button on the first display screen is selected, the processor 180 may accept the call connection request and may proceed with a procedure for performing the call connection. Alternatively, when the reject button on the first display screen is selected, the processor 180 may reject the call connection request and may proceed with a procedure for rejecting the call connection. Thereafter, the procedure may return to FIG. 7.

When the notification event is not detected in operation 813, the processor 180 may perform a corresponding function in operation 814. For example, the processor 180 may perform the corresponding function through the first display 151. In this case, the processor 180 may display a background screen on the first display 151, and may display a content of a certain function. Alternatively, the processor 180 may maintain the first display 151 and the second display 153.

According to various embodiments, the processor 180 may detect whether the electronic device 100 is rotated by a motion of the electronic device 100 in operation 713. For example, the electronic device 100 may be rotated by the user. In this case, the first display 151 may be in the activation state. For example, the first display 151 may be in the activation state as shown in FIG. 12 panel (a) or FIG. 14 panel (a). In this case, the first display 151 may be displaying a background screen under control of the processor 180, and may be displaying a content of a certain function. Alternatively, the first display 151 may be in the deactivated state. For example, the first display 151 may be in the deactivated state as shown in FIG. 13 panel (a).

The processor 180 may detect the rotation of the electronic device 100 by using the sensor unit 120. For example, the processor 180 may detect that the electronic device 100 is rotated by detecting that the direction of the second display 153 is changed from a second direction to a first direction by a motion of the electronic device 100. In another example, the processor 180 may detect that the electronic device 100 is rotated, according to a change in the tilt angle of the second display 153 from a plane parallel to the ground, caused by a motion of the electronic device 100. The rotation of the electronic device 100 may be interchangeably used with the term "flip." Herein, the flip may be determined based on a direction and an orientation of the first display 151, a direction and a posture of the second display 153, and a movement speed of the electronic device 100. For example, a flip may indicate that the direction of the first display 151 is changed from the first direction to the second direction, and the direction of the second display 153 is changed from the second direction to the first direction, for example, the first display 151 and the second display 153 are reversed. The processor 180 may detect a motion (for example, a rotation) of the electronic device 100 by using the input unit 160. In this case, the processor 180 may detect the rotation of the electronic device 100 with reference to a user input. The processor 180 may detect a motion (for example, a rotation) of the electronic device 100 by using the camera 130. In this case, the processor 180 may detect the rotation of the electronic device 100 by recognizing the user in an image received through the camera 130, and determining the second display 153 facing the user.

Even when the electronic device 100 is rotated, a grip area of the user on the electronic device 100 may be maintained. In this case, the grip area may be maintained on the main area of the second display 153. In addition, the grip area may be maintained on at least one of an edge area of the first display 151 or an edge area of the second display 151. There may exist a function setting area assigned a pre-set function in a pre-set position of at least one of the first display 151 or the second display 153.

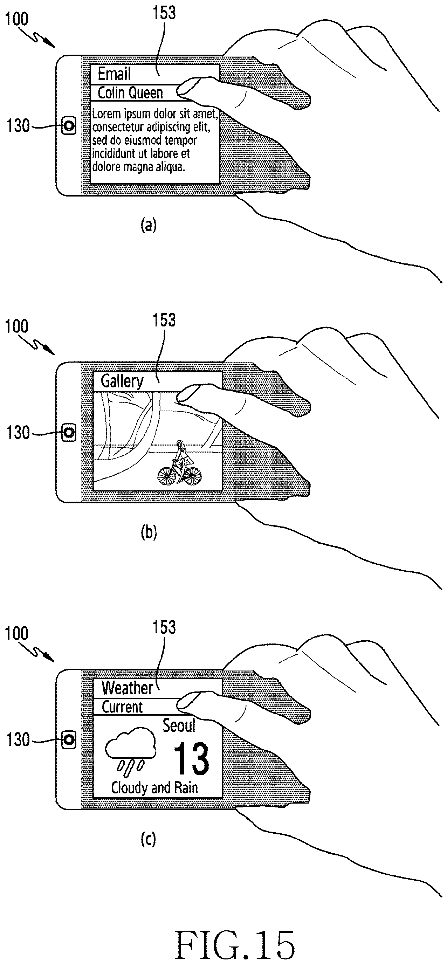

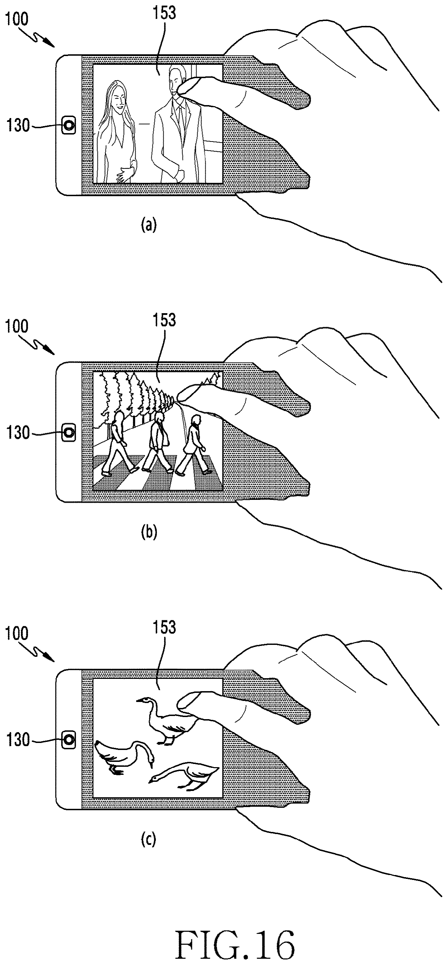

In operation 715, the processor 180 may execute a function on the second display 153 in response to the rotation of the electronic device 100. For example, the processor 180 may display a content of a certain function on the second display 153. To achieve this, the processor 180 may activate the second display 153 as shown in FIG. 12 panel (b), FIG. 13 panel (b), FIG. 14 panel (b), FIG. 15 or FIG. 16. In this case, a display direction of the first display 151 and a display direction of the second display 153 may be different from each other. For example, the display direction of the first display 151 and the display direction of the second display 153 may be orthogonal to each other.

The processor 180 may determine a function for the second display 153 based on at least one of whether the first display 151 is activated and a content displayed on the first display 151. For example, when the first display 151 is activated, the processor 180 may execute a function of a content displayed on the first display 151 on the second display 153 as shown in FIG. 12 panel (b) or FIG. 14 panel (b). Alternatively, when the first display 151 is deactivated, the processor 180 may execute a pre-set function on the second display 153 as shown in FIG. 13 panel (b), FIG. 15, or FIG. 16. Alternatively, even when the first display 151 is activated, the processor 180 may execute a pre-set function on the second display 153, regardless of a function of a content displayed on the first display 151 as shown in FIG. 13 panel (b), FIG. 15, or FIG. 16. For example, the processor 180 may display, on the second display 153, a second content associated with a first content displayed on the first display 151. In this case, the second content may be a content that includes at least one same data as the first content, a content that is pre-mapped onto the first content, a content that includes data associated with the first content, or a content that includes at least one function from among functions executable by the first content. In addition, the processor 180 may display, on the second display 153, a pre-set content that is not associated with the first content displayed on the first display 151.

The processor 180 may determine a function for the second display 153 based on a grip area. For example, when the grip area corresponds to the function setting area during the rotation, the processor 180 may execute a function assigned to the function setting area on the second display 153 as shown in FIG. 13 panel (b). Alternatively, when the grip area does not correspond to the function setting area during the rotation, the processor 180 may execute a pre-set function on the second display 153 as shown in FIG. 15 or FIG. 16.

The processor 180 may determine a display area for displaying a content on the second display 153. In this case, a position of the display area on the second display 153 may be pre-set. Alternatively, the processor 180 may determine a display area in the other area except for the grip area from the second display 153.

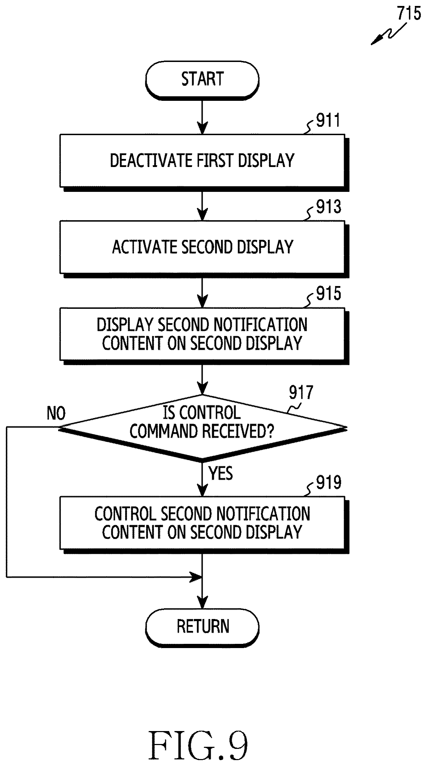

FIG. 9 is a flowchart of a method of executing a function on the second display 153 in FIG. 7.

Referring to FIG. 9, the processor 180 may deactivate the first display 151 in operation 911. For example, when the rotation of the electronic device 100 is detected while the first notification content is being displayed on the first display 151 as the first display screen as shown in FIG. 12 panel (a), the processor 180 may deactivate the first display 151. In addition, the processor 180 may activate the second display 153 in operation 913.

In operation 915, the processor 180 may display a second notification content on the second display 153. In this case, the second notification content may be expressed as a second display screen for the second display 153 in response to the notification event of the first notification content. The first notification content may be a content that was displayed on the first display 151 before the first display 151 is deactivated. In addition, the second notification content may be a content associated with the first notification content. The processor 180 may display the second notification content on the second display 153 as the second display screen as shown in FIG. 12 panel (b). Herein, the second display screen may include at least one control button assigned at least one control command for controlling the second notification content. For example, the control button may include at least one of an accept button to accept a call connection request or a reject button to reject the call connection request. In this case, the processor 180 may determine a position of the control button on the second display screen, such that the user of the electronic device 100 can select the control button without changing the grip area on the electronic device 100.

The display direction of the first display 151 and the display direction of the second display 153 may be different from each other. For example, the display direction of the first display 151 and the display direction of the second display 153 may be orthogonal to each other. To achieve this, the processor 180 may determine a display area for displaying a content on the second display 153. In this case, a position of the display area on the second display 153 may be pre-set. Alternatively, the processor 180 may determine a display area in the other area except for the grip area from the second display 153.

In operation 917, the processor 180 may detect whether a control command is received. When the control command is received, the processor 180 may control the second notification content on the second display 153 in operation 919. For example, when the control button on the second display screen is selected, the processor 180 may control the second notification content based on the control command assigned to the control button. For example, when the accept button on the second display screen is selected, the processor 180 may accept the call connection request and may proceed with a procedure for performing the call connection. Alternatively, when the reject button on the second display screen is selected, the processor 180 may reject the call connection request and may proceed with a procedure for rejecting the call connection. Thereafter, the procedure may return to FIG. 7.

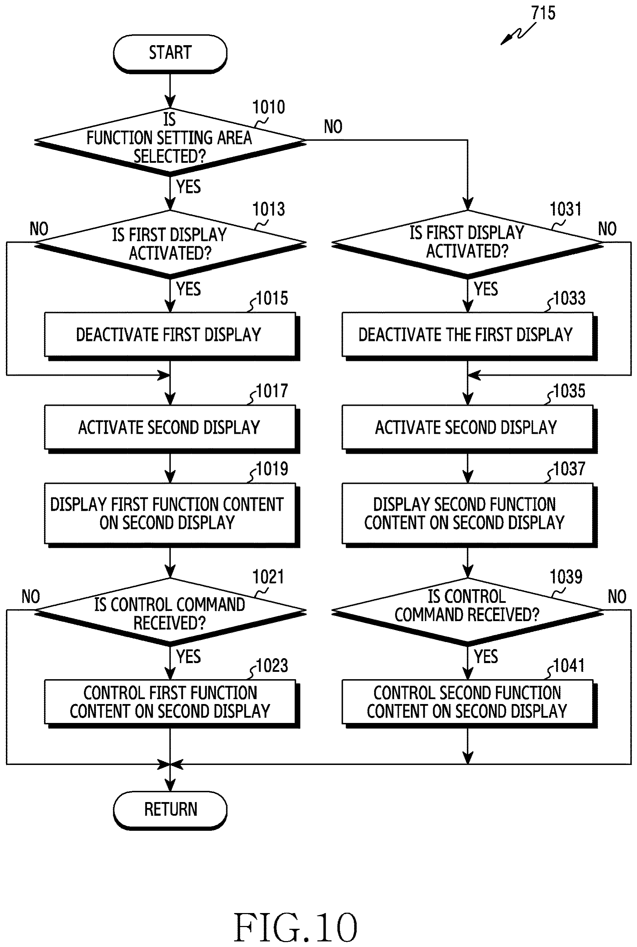

FIG. 10 is a flowchart of a method of executing a function on the second display 153 in FIG. 7._

Referring to FIG. 10, the processor 180 may determine whether the function setting area is selected in operation 1010. For example, the processor 180 may determine whether the grip area corresponds to the function setting area when the electronic device 100 is rotated. For example, the processor 180 may determine whether the user of the electronic device 100 rotates the electronic device 100 while being in contact with the function setting area.

When it is determined that the function setting area is selected in operation 1010, the processor 180 may determine whether the first display 151 is activated in operation 1013. In this case, when it is determined that the first display 151 is activated in operation 1013, the processor 180 may deactivate the first display 151 in operation 1015. When it is determined that the first display 151 is deactivated in operation 1013, the processor 180 may maintain the deactivated first display 151. For example, when the rotation of the electronic device 100 is detected while the first display 151 is deactivated as shown in FIG. 13 panel (a), the processor 180 may maintain the deactivated first display 151. In addition, the processor 180 may activate the second display 153 in operation 1017.

The processor 180 may display a first function content on the second display 153 in operation 1019. In this case, the first function content may be a content that corresponds to a function assigned to the function setting area, and may be expressed as the second display screen for the second display 153. The processor 180 may display the first function content on the second display 153 as the second display screen as shown in FIG. 13 panel (b). For example, an image photographing function may be assigned to the function setting area. By doing so, the processor 180 may activate the camera 130 and may receive an image from the camera 130. In addition, the processor 180 may display an image, for example, a preview image, on the second display 153.

The display direction of the first display 151 and the display direction of the second display 153 may be different from each other. For example, the display direction of the first display 151 and the display direction of the second display 153 may be orthogonal to each other. To achieve this, the processor 180 may determine a display area for displaying a content on the second display 153. In this case, a position of the display area on the second display 153 may be pre-set. Alternatively, the processor 180 may determine a display area in the other area except for the grip area from the second display 153.

The processor 180 may detect whether a control command is received in operation 1021. When the control command is received, the processor 180 may control the first function content on the second display 153 in operation 1023. For example, when the second display screen is selected, the processor 180 may capture the image displayed on the second display 153 and may store the image in the memory 170. Thereafter, the procedure may return to FIG. 7.

When it is determined that the function setting area is not selected in operation 1010, the processor 180 may determine whether the first display 151 is activated in operation 1031. In this case, when it is determined that the first display 151 is activated in operation 1031, the processor 180 may deactivate the first display 151 in operation 1033. On the other hand, when it is determined that the first display 151 is deactivated in operation 1031, the processor 180 may maintain the deactivated first display 151. For example, when the rotation of the electronic device 100 is detected while the first display 151 is deactivated as shown in FIG. 13 panel (a), the processor 180 may maintain the deactivated first display 151. In addition, the processor 180 may activate the second display 153 in operation 1035.

The processor 180 may display a second function content on the second display 153 in operation 1037. In this case, the second function content may be a content that corresponds to at least one pre-set function, and may be expressed as the second display screen for the second display 153. The processor 180 may display the second function content on the second display 153 as the second display screen as shown in FIG. 15 panel (a). For example, the processor 180 may display any one of superordinate items corresponding to a plurality of functions on the second display 153 in a card type.

According to an embodiment, the display direction of the first display 151 and the display direction of the second display 153 may be different from each other. For example, the display direction of the first display 151 and the display direction of the second display 153 may be orthogonal to each other. To achieve this, the processor 180 may determine a display area for displaying a content on the second display 153. In this case, a position of the display area on the second display 153 may be pre-set. Alternatively, the processor 180 may determine a display area in the other area except for the grip area from the second display 153.

The processor 180 may determine whether a control command is received in operation 1039. When the control command is received, the processor 180 may control the second function content on the second display 153 in operation 1041. For example, the processor 180 may detect a user input for scrolling the superordinate items as the control command. Herein, the user input for scrolling the superordinate items may be, for example, a touch gesture including at least one of a drag, a swipe, or a flit. In response to this, the processor 180 may scroll the superordinate items. By doing so, the processor 180 may display another item of the superordinate items on the second display 153 in a card type as shown in FIG. 15 panel (b) or FIG. 15 panel (c). The processor 180 may detect a user input for displaying subordinate items of any one of the superordinate items as the control command. Herein, the user input for displaying the subordinate items may be, for example, a touch gesture including at least one of a single tap, a multi tap, or a continuous tap. In response to this, the processor 180 may display any one of the subordinate items on the second display 153 in a card type as shown in FIG. 16 panel (a). Furthermore, the processor 180 may detect a user input for scrolling the subordinate items as the control command. Herein, the user input for scrolling the subordinate items may be, for example, a touch gesture including at least one of a drag, a swipe, or a flit. In response to this, the processor 180 may scroll the subordinate items. By doing so, the processor 180 may display another item of the subordinate items on the second display 153 in a card type as shown in FIG. 16 panel (b) or FIG. 16 panel (c). Thereafter, the procedure may return to FIG. 7.

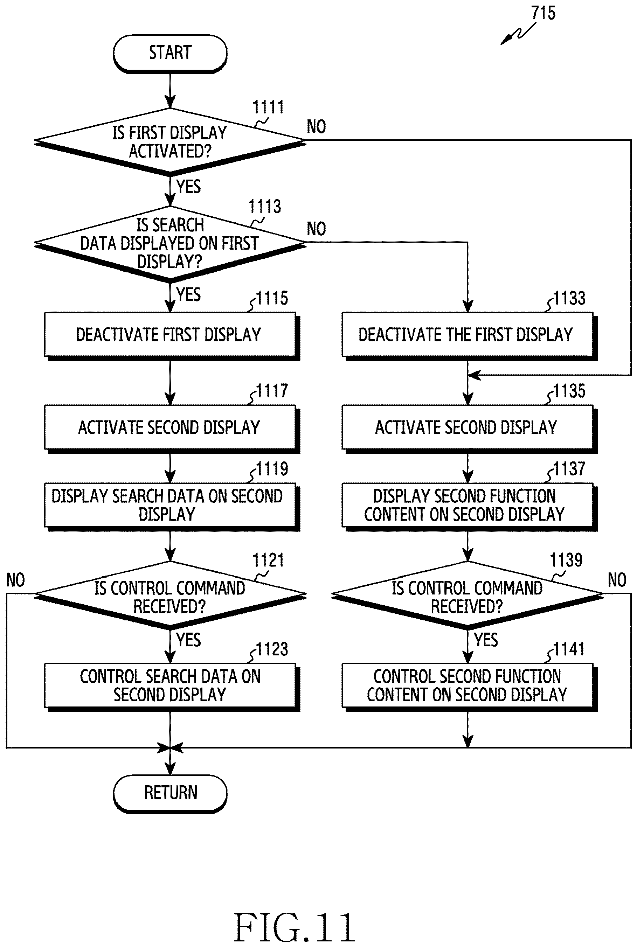

FIG. 11 is a view illustrating a sequence of the operation of executing a function on the second display 153 in FIG. 7._

Referring to FIG. 11, the processor 180 may determine whether the first display 151 is activated in operation 1111. In this case, when it is determined that the first display 151 is activated in operation 1111, the processor 180 may determine whether search data is displayed on the first display 151 in operation 1113. In addition, when it is determined that search data is displayed on the first display 151 in operation 1113, the processor 180 may deactivate the first display 151 in operation 1115. For example, when a rotation of the electronic device 100 is detected while search data is being displayed as a result of searching according to a user's voice as shown in FIG. 14 panel (a), the processor 180 may deactivate the first display 151. In addition, the processor 180 may activate the second display 153 in operation 1117.

The processor 180 may display the search data on the second display 153 in operation 1119. The processor 180 may display the search data on the second display 153 as the second display screen as shown in FIG. 14 panel (b). For example, when the search data that has been displayed on the first display 151 includes a plurality of search items, the processor 180 may display at least one of the search items on the second display 153 in a card type.

According to an embodiment, the display direction of the first display 151 and the display direction of the second display 153 may be different from each other. For example, the display direction of the first display 151 and the display direction of the second display 153 may be orthogonal to each other. To achieve this, the processor 180 may determine a display area for displaying a content on the second display 153. In this case, a position of the display area on the second display 153 may be pre-set. Alternatively, the processor 180 may determine a display area in the other area except for the grip area from the second display 153.

The processor 180 may determine whether a control command is received in operation 1121. When the control command is received, the processor 180 may control the search data on the second display 153 in operation 1123. For example, the processor 180 may detect a user input for scrolling the search items as the control command. Herein, the user input for scrolling the search items may be, for example, a touch gesture including at least one of a drag, a swipe, or a flit. In response to this, the processor 180 may scroll the search items. By doing so, the processor 180 may display at least one item of the search items displayed on the first display 151 on the second display 153 in a card type. The processor 180 may detect a user input for displaying detailed information of any one of the search items as the control command. Herein, the user input for displaying the detailed information may be, for example, a touch gesture including at least one of a single tap, a multi tap, or a continuous tap. In response to this, the processor 180 may display the detailed information of any one of the search items on the second display 153. Thereafter, the procedure may return to FIG. 7.

When it is determined that the first display 151 is activated in operation 1111, but it is determined that search data is not displayed on the first display 151 in operation 1113, the processor 180 may deactivate the first display 151 in operation 1133. When it is determined that the first display 151 is deactivated in operation 1111, the processor 180 may maintain the deactivated first display 151. In addition, the processor 180 may activate the second display 153 in operation 1135.

The processor 180 may display a second function content on the second display 153 in operation 1137. In this case, the second function content may be a content corresponding to at least one pre-set function, and may be expressed as the second display screen for the second display 153. The processor 180 may display the second function content on the second display 153 as the second display screen as shown in FIG. 15 panel (a). For example, the processor 180 may display any one of superordinate items corresponding to a plurality of functions on the second display 153 in a card type.

The display direction of the first display 151 and the display direction of the second display 153 may be different from each other. For example, the display direction of the first display 151 and the display direction of the second display 153 may be orthogonal to each other. To achieve this, the processor 180 may determine a display area for displaying a content on the second display 153. In this case, a position of the display area on the second display 153 may be pre-set. Alternatively, the processor 180 may determine a display area in the other area except for the grip area from the second display 153.

The processor 180 may detect whether a control command is received in operation 1139. When the control command is received, the processor 180 may control the second function content on the second display 153 in operation 1141. For example, the processor 180 may detect a user input for scrolling the superordinate items as the control command. Herein, the user input for scrolling the superordinate items may be, for example, a touch gesture including at least one of a drag, a swipe, or a flit. In response to this, the processor 180 may scroll the superordinate items. By doing so, the processor 180 may display another item of the superordinate items on the second display 153 in a card type as shown in FIG. 15 panel (b) or FIG. 15 panel (c). The processor 180 may detect a user input for displaying subordinate items of any one of the superordinate items as the control command. Herein, the user input for displaying the subordinate items may be, for example, a touch gesture including at least one of a single tap, a multi tap, or a continuous tap. In response to this, the processor 180 may display any one of the subordinate items on the second display 153 in a card type as shown in FIG. 16 panel (a). Furthermore, the processor 180 may detect a user input for scrolling the subordinate items as the control command. Herein, the user input for scrolling the subordinate items may be, for example, a touch gesture including at least one of a drag, a swipe, or a flit. In response to this, the processor 180 may scroll the subordinate items. By doing so, the processor 180 may display another item of the subordinate items on the second display 153 in a card type as shown in FIG. 16 panel (b) or FIG. 16 panel (c). Thereafter, the procedure may return to FIG. 7.

The processor 180 may detect whether the electronic device 100 is rotated by a motion of the electronic device 100 in operation 717. For example, when the second display 153 is activated and a content of a certain function is displayed on the second display 153, the electronic device 100 may be rotated by the user. For example, after a control command by a user input is received in the state in which the content for controlling the call connection is displayed on the second display 153 of the electronic device 100 as shown in FIG. 13 panel (b), it may be detected whether the electronic device 100 is rotated.

In response to the electronic device 100 being rotated, the processor 180 may control to display a content on the first display 151 according to an execution function of the second display 153 in operation 719. For example, the processor 180 may display, on the first display 151, a content associated with the content displayed on the second display 153. For example, the processor 180 may display, on the first display 151, a resulting screen corresponding to the received control command regarding the content displayed on the second display 153, and/or an operation performance screen according to the control command. Herein, the control command may be received by a user input during operation 715 before the rotation of the electronic device 100 is detected. For example, as shown in FIG. 12 panel (b), a control command for requesting a call connection may be received by a user input while the second display 153 is displaying a call connection control screen, and, when a rotation of the electronic device 100 is detected, the processor 180 may perform the call connection, and may display a content indicating that the call is connected on the first display 151. In this case, the display direction of the first display 151 and the display direction of the second display 153 may be different from each other. For example, the display direction of the first display 151 may be orthogonal to the display direction of the second display 153. In addition, the processor 180 may deactivate the second display 153. According to an embodiment, an operating method of the electronic device 100 may include determining the first display 151 facing the first direction and the second display 153 disposed on a rear surface of the first display 151, based on a posture of the electronic device 100; detecting that the direction of the first display 151 is changed from the first direction to the second direction, based on a motion of the electronic device 100; and, in response to the direction of the first display 151 being changed from the first direction to the second direction, displaying a content on the second display 153.

A content display type of the first display 151 and a content display type of the second display 153 may be different from each other.

Displaying the content on the second display 153 may include: determining a portion of the second display 153 as a grip area; and determining the other area except for the grip area on the second display 153 as a display area for displaying the content.

Displaying the content on the second display 153 may include identifying a first content displayed on the first display 151; and displaying, on the second display 153, a second content associated with the first content displayed on the first display 151.

Displaying the content on the second display 153 may include detecting a grip area from an edge of at least one of the first display 151 and the second display 153 during a motion of the electronic device; and determining a content to be displayed on the second display 153 based on a position of the grip area.

Determining a content to be displayed on the second display 153 may include determining whether the grip area corresponds to a pre-defined area of at least one of the first display 151 or the second display 153, and, when the grip area corresponds to the pre-defined area, determining a content corresponding to a function assigned to the pre-defined area as a content to be displayed on the second display 153.

Determining the first display 151 and the second display 153 may further include detecting a notification event; determining a first content to be displayed on the first display 151 based on the notification event; and displaying the first content on the first display 151.

Displaying the content on the second display 153 may include displaying any one of superordinate items of pre-set functions on the second display 153; detecting a user input for scrolling the superordinate items; and scrolling the superordinate items based on the user input and displaying another item of the superordinate items on the second display 153.

Displaying the content on the second display 153 may include detecting a user input for displaying subordinate items of the displayed superordinate item, displaying any one of the subordinate items on the second display 153, detecting a user input for scrolling the subordinate items, and scrolling the subordinate items based on the user input and displaying another item of the subordinate items on the second display 153.

The operating method of the electronic device 100 may further include detecting a user input regarding the content displayed on the second display 153; detecting that the direction of the first display 151 is changed from the second direction to the first direction based on a motion of the electronic device; in response to the direction of the first display 151 being changed from the second direction to the first direction, displaying, on the first display 151, a content indicating a result of the user input regarding the content displayed on the second display 153.

A user of the electronic device 100 can easily operate the electronic device 100 with one hand. For example, the processor 180 may activate the second display 153 based on the rotation of the electronic device 100, regardless of whether the first display 151 is activated or not. In this case, the processor 180 may display a content on the second display 153, such that the user of the electronic device 100 can operate the electronic device 100 without changing a grip area on the electronic device 100. To achieve this, the processor 180 may determine a content for the second display 153, based on at least one of a content displayed on the first display 151 or a position of the grip area. Accordingly, use efficiency and user convenience of the electronic device may be enhanced

The term "module" as used herein may, for example, may indicate a unit including one of hardware, software, and firmware or a combination of two or more of them. The term "module" may be interchangeably used with, for example, the terms "unit", "logic", "logical block", "component", and "circuit". The term "module" may indicate a minimum unit of an integrated component element or a part thereof. The term "module" may indicate a minimum unit for performing one or more functions or a part thereof. The term "module" may indicate a device that may be mechanically or electronically implemented. For example, the term "module" according to the present disclosure may indicate at least one of an application-specific IC (ASIC), a field-programmable gate array (FPGA), and a programmable-logic device for performing operations which are known or will be developed.

According to various embodiments, at least some of the devices (for example, modules or functions thereof) or the method (for example, operations) according to the present disclosure may be implemented by a command stored in a non-transitory computer-readable storage medium in a program module form. An instruction, when executed by a processor (e.g., the processor 120), may cause the one or more processors to execute a function corresponding to the instruction. The non-transitory computer-readable storage medium may be, for example, the memory 130.

The non-transitory computer-readable recoding medium may include a hard disk, a floppy disk, magnetic media (for example, a magnetic tape), optical media (for example, a compact disc read only memory (CD-ROM) and a DVD), magneto-optical media (for example, a floptical disk), a hardware device (for example, a ROM, a random access memory (RAM), a flash memory), and the like. In addition, the program instructions may include high level language code, which may be executed in a computer by using an interpreter, as well as machine code made by a compiler.

## Claims

1. An electronic device (100), comprising:
a display comprising a first display (151) facing a first direction, and a second display (153) disposed on a rear surface of the first display and facing a second direction;
a processor (180) electrically connected with the display; and
a memory (170) electrically connected with the processor,
wherein the memory (170) is configured to store instructions, which when executed, cause the processor (180) to:
in response to detecting (711) a first posture of the electronic device (100) that the first display (151) is faced in the first direction and the second display (153) is faced in the second direction, display (819) a content on the first display;
determine (713) whether a direction of the first display (151) is changed from the first direction to the second direction, based on a motion of the electronic device (100); and
in response to determining that the direction of the first display (151) being changed from the first direction to the second direction, display (715) the content on the second display (153).

2. The electronic device (100) of claim 1, wherein a content display type of the first display (151) and a content display type of the second display (153) are different from each other.

3. The electronic device (100) of claim 1, wherein the memory (170) is further configured to store instructions that determine a portion of the second display (153) as a grip area, and determine another area except for the grip area on the second display (153) as a display area for displaying the content.

4. The electronic device (100) of claim 1, wherein the memory (170) is further configured to store instructions that control to identify a first content displayed on the first display (151), and to display, on the second display (153), a second content associated with the first content displayed on the first display (151).

5. The electronic device (100) of claim 1, wherein the memory (170) is further configured to store instructions that detect a grip area from an edge of at least one of the first display (151) and the second display (153) during a motion of the electronic device (100), and determine a content to be displayed on the second display (153) based on a position of the grip area.

6. The electronic device (100) of claim 1, wherein the memory (170) is further configured to store instructions that control to detect a notification event, determine a first content to be displayed on the first display (151) based on the notification event, and display the first content on the first display (151).

7. The electronic device (100) of claim 1, wherein the memory (170) is further configured to store instructions that control to display any one of superordinate items of pre-set functions on the second display (153), detect a user input for scrolling the superordinate items, and scroll the superordinate items based on the user input and to display another item of the superordinate items on the second display (153).

8. The electronic device (100) of claim 1, wherein the memory (170) is further configured to store instructions that control to detect a user input regarding the content displayed on the second display (153), detect that the direction of the first display (151) is changed from the second direction to the first direction based on a motion of the electronic device (100), and, in response to the direction of the first display (151) being changed from the second direction to the first direction, display, on the first display (151), a content indicating a result of the user input regarding the content displayed on the second display (153).

9. A method of an electronic device (100) comprising a first display (151) facing a first direction, and a second display (153) disposed on a rear surface of the first display and facing a second direction, the method comprising:
in response to detecting (711) a first posture of the electronic device (100) that the first display (151) is faced in the first direction and the second display (153) is faced in the second direction, displaying (819) a content on the first display (151);
determining (713) whether a direction of the first display (151) is changed from the first direction to the second direction, based on a motion of the electronic device (100); and
in response to determining that the direction of the first display (151) being changed from the first direction to the second direction, displaying (715) the content on the second display (153).

10. The method of claim 9, wherein displaying the content on the second display (153) comprises:
determining a portion of the second display (153) as a grip area; and
determining another area except for the grip area on the second display (153) as a display area for displaying the content.

11. The method of claim 9, wherein displaying the content on the second display (153) comprises:
identifying a first content displayed on the first display (151); and
displaying, on the second display (153), a second content associated with the first content displayed on the first display (151).

12. The method of claim 9, wherein displaying the content on the second display (153) comprises:
detecting a grip area from an edge of at least one of the first display (151) and the second display (153) during a motion of the electronic device (100); and
determining a content to be displayed on the second display (153) based on a position of the grip area.

13. The method of claim 9, wherein determining the first display (151) facing the first direction and the second display (153) disposed on the rear surface of the first display (151) further comprises:
detecting a notification event;
determining a first content to be displayed on the first display (151) based on the notification event; and
displaying the first content on the first display (151).

14. The method of claim 9, wherein displaying the content on the second display (153) comprises:
displaying any one of superordinate items of pre-set functions on the second display (153);
detecting a user input for scrolling the superordinate items; and
scrolling the superordinate items based on the user input and displaying another item of the superordinate items on the second display (153).

15. The method of claim 9, further comprising:
detecting a user input regarding the content displayed on the second display (153);
detecting that the direction of the first display (151) is changed from the second direction to the first direction based on a motion of the electronic device (100); and
in response to the direction of the first display (151) being changed from the second direction to the first direction, displaying, on the first display (151), a content indicating a result of the user input regarding the content displayed on the second display (153).

## Patentansprüche

1. Elektronisches Gerät (100), umfassend:
eine Anzeige, die eine erste Anzeige (151) umfasst, die einer ersten Richtung zugewandt ist, und eine zweite Anzeige (153), die auf einer Rückseite der ersten Anzeige angeordnet ist und einer zweiten Richtung zugewandt ist;
einen Prozessor (180), der elektrisch mit der Anzeige verbunden ist; und
einen Speicher (170), der elektrisch mit dem Prozessor verbunden ist, wobei der Speicher (170) konfiguriert ist, um Anweisungen zu speichern, die bei Ausführung bewirken, dass der Prozessor (180):
als Reaktion auf das Erfassen (711) einer ersten Haltung des elektronischen Geräts (100), dass die erste Anzeige (151) in die ersten Richtung gerichtet ist und die zweite Anzeige (153) in die zweiten Richtung gerichtet ist, einen Inhalt auf der ersten Anzeige anzeigt (819);
bestimmt (713), ob eine Richtung der ersten Anzeige (151) von der ersten Richtung in die zweite Richtung geändert wird, basierend auf einer Bewegung des elektronischen Geräts (100); und
als Reaktion auf das Bestimmen, dass die Richtung der ersten Anzeige (151) von der ersten Richtung in die zweite Richtung geändert wird, den Inhalt auf der zweiten Anzeige (153) anzeigt (715).

2. Elektronisches Gerät (100) nach Anspruch 1, wobei ein Inhaltsanzeigetyp der ersten Anzeige (151) und ein Inhaltsanzeigetyp der zweiten Anzeige (153) voneinander verschieden sind.

3. Elektronisches Gerät (100) nach Anspruch 1, wobei der Speicher (170) ferner konfiguriert ist, um Anweisungen zu speichern, die einen Teil der zweiten Anzeige (153) als Griffbereich bestimmen, und einen anderen Bereich mit Ausnahme des Griffbereichs auf der zweiten Anzeige (153) als Anzeigebereich zum Anzeigen des Inhalts bestimmen.

4. Elektronisches Gerät (100) nach Anspruch 1, wobei der Speicher (170) ferner konfiguriert ist, um Anweisungen zu speichern, die steuern, um einen ersten Inhalt zu identifizieren, der auf der ersten Anzeige (151) angezeigt wird, und um auf der zweiten Anzeige (153) einen zweiten Inhalt anzuzeigen, der dem ersten auf der ersten Anzeige (151) angezeigten Inhalt zugeordnet ist.

5. Elektronisches Gerät (100) nach Anspruch 1, wobei der Speicher (170) ferner konfiguriert ist, um Anweisungen zu speichern, die einen Griffbereich von einem Rand von mindestens einer von der ersten Anzeige (151) und der zweiten Anzeige (153) während einer Bewegung des elektronischen Geräts (100) erfassen und einen Inhalt bestimmen, der auf der zweiten Anzeige (153) basierend auf einer Position des Griffbereichs angezeigt werden soll.

6. Elektronisches Gerät (100) nach Anspruch 1, wobei der Speicher (170) ferner konfiguriert ist, um Anweisungen zu speichern, die steuern, um ein Benachrichtigungsereignis zu erfassen, einen ersten Inhalt zu bestimmen, der auf der ersten Anzeige (151) basierend auf dem Benachrichtigungsereignis angezeigt werden soll, und den ersten Inhalt auf der ersten Anzeige (151) anzuzeigen.

7. Elektronisches Gerät (100) nach Anspruch 1, wobei der Speicher (170) ferner konfiguriert ist, um Anweisungen zu speichern, die steuern, um eines von übergeordneten Elementen von voreingestellten Funktionen auf der zweiten Anzeige (153) anzuzeigen, eine Benutzereingabe zum Scrollen der übergeordneten Elemente zu erfassen und die übergeordneten Elemente basierend auf der Benutzereingabe zu scrollen, und um ein anderes Element der übergeordneten Elemente auf der zweiten Anzeige (153) anzuzeigen.

8. Elektronisches Gerät (100) nach Anspruch 1, wobei der Speicher (170) ferner konfiguriert ist, um Anweisungen zu speichern, die steuern, um eine Benutzereingabe bezüglich des auf der zweiten Anzeige (153) angezeigten Inhalts zu erfassen, zu erfassen, dass die Richtung der ersten Anzeige (151) von der zweiten Richtung in die erste Richtung geändert wird basierend auf einer Bewegung des elektronischen Geräts (100), und als Reaktion darauf, dass die Richtung der ersten Anzeige (151) von der zweiten Richtung in die erste Richtung geändert wird, auf der ersten Anzeige (151) einen Inhalt anzuzeigen, der ein Ergebnis der Benutzereingabe bezüglich des auf der zweiten Anzeige (153) angezeigten Inhalts anzeigt.

9. Verfahren eines elektronischen Geräts (100), das eine erste Anzeige (151), die einer ersten Richtung zugewandt ist, und eine zweite Anzeige (153), die auf einer Rückseite der ersten Anzeige angeordnet ist und einer zweiten Richtung zugewandt ist, umfasst, wobei das Verfahren umfasst:
als Reaktion auf das Erfassen (711) einer ersten Haltung des elektronischen Geräts (100), dass die erste Anzeige (151) in die ersten Richtung gerichtet ist und die zweite Anzeige (153) in die zweiten Richtung gerichtet ist, Anzeigen (819) eines Inhalts auf der ersten Anzeige (151);
Bestimmen (713), ob eine Richtung der ersten Anzeige (151) von der ersten Richtung in die zweite Richtung geändert wird, basierend auf einer Bewegung des elektronischen Geräts (100); und
als Reaktion auf das Bestimmen, dass die Richtung der ersten Anzeige (151) von der ersten Richtung in die zweite Richtung geändert wird, Anzeigen (715) des Inhalts auf der zweiten Anzeige (153).

10. Verfahren nach Anspruch 9, wobei das Anzeigen des Inhalts auf der zweiten Anzeige (153) umfasst:
Bestimmen eines Teils der zweiten Anzeige (153) als Griffbereich; und
Bestimmen eines anderen Bereichs mit Ausnahme des Griffbereichs auf der zweiten Anzeige (153) als Anzeigebereich zum Anzeigen des Inhalts.

11. Verfahren nach Anspruch 9, wobei das Anzeigen des Inhalts auf der zweiten Anzeige (153) umfasst:
Identifizieren eines ersten Inhalts, der auf der ersten Anzeige (151) angezeigt wird; und
Anzeigen eines zweiten Inhalts, der dem ersten auf der ersten Anzeige (151) angezeigten Inhalt zugeordnet ist, auf der zweiten Anzeige (153).

12. Verfahren nach Anspruch 9, wobei das Anzeigen des Inhalts auf der zweiten Anzeige (153) umfasst:
Erfassen eines Griffbereichs von einem Rand von mindestens einer von der ersten Anzeige (151) und der zweiten Anzeige (153) während einer Bewegung des elektronischen Geräts (100); und
Bestimmen eines Inhalts, der auf der zweiten Anzeige (153) basierend auf einer Position des Griffbereichs angezeigt werden soll.

13. Verfahren nach Anspruch 9, wobei das Bestimmen der ersten Anzeige (151), die der ersten Richtung zugewandt ist, und der zweiten Anzeige (153), die auf der Rückseite der ersten Anzeige (151) angeordnet ist, ferner umfasst:
Erfassen eines Benachrichtigungsereignisses;
Bestimmen eines ersten Inhalts, der auf der ersten Anzeige (151) basierend auf dem Benachrichtigungsereignis angezeigt werden soll; und
Anzeigen des ersten Inhalts auf der ersten Anzeige (151).

14. Verfahren nach Anspruch 9, wobei das Anzeigen des Inhalts auf der zweiten Anzeige (153) umfasst:
Anzeigen eines übergeordneten Elements von voreingestellten Funktionen auf der zweiten Anzeige (153);
Erfassen einer Benutzereingabe zum Scrollen der übergeordneten Elemente; und
Scrollen der übergeordneten Elemente basierend auf der Benutzereingabe und Anzeigen eines anderen Elements der übergeordneten Elemente auf der zweiten Anzeige (153).

15. Verfahren nach Anspruch 9, ferner umfassend:
Erfassen einer Benutzereingabe bezüglich des auf der zweiten Anzeige angezeigten Inhalts (153);
Erfassen, dass die Richtung der ersten Anzeige (151) von der zweiten Richtung in die erste Richtung geändert wird basierend auf einer Bewegung des elektronischen Geräts (100); und
als Reaktion darauf, dass die Richtung der ersten Anzeige (151) von der zweiten Richtung in die erste Richtung geändert wird, Anzeigen eines Inhalts, der ein Ergebnis der Benutzereingabe bezüglich des auf der zweiten Anzeige (153) angezeigten Inhalts anzeigt, auf der ersten Anzeige (151).

## Revendications

1. Dispositif électronique (100), comprenant :
un dispositif d'affichage comprenant un premier dispositif d'affichage (151) orienté selon une première direction, et un second dispositif d'affichage (153) disposé sur une surface arrière du premier dispositif d'affichage et orienté selon une seconde direction ;
un processeur (180) connecté électriquement au dispositif d'affichage ; et
une mémoire (170) connectée électriquement au processeur,
ladite mémoire (170) étant configurée pour stocker des instructions qui, lorsqu'elles sont exécutées, amènent le processeur (180) à :
en réponse à la détection (711) d'une première position du dispositif électronique (100) que le premier dispositif d'affichage (151) est orienté selon la première direction et le second dispositif d'affichage (153) est orienté selon la seconde direction, afficher (819) un contenu sur le premier dispositif d'affichage ;
déterminer (713) si une direction du premier dispositif d'affichage (151) est changée de la première direction à la seconde direction, sur la base d'un mouvement du dispositif électronique (100) ; et
en réponse à la détermination que la direction du premier dispositif affichage (151) est changée de la première direction à la seconde direction, afficher (715) le contenu sur le second dispositif d'affichage (153).

2. Dispositif électronique (100) selon la revendication 1, un type d'affichage de contenu du premier dispositif d'affichage (151) et un type d'affichage de contenu du second dispositif d'affichage (153) étant différents l'un de l'autre.

3. Dispositif électronique (100) selon la revendication 1, ladite mémoire (170) étant en outre configurée pour stocker des instructions qui déterminent une partie du second dispositif d'affichage (153) en tant que zone de préhension, et déterminent une autre zone à l'exception de la zone de préhension sur le second dispositif d'affichage (153) en tant que zone d'affichage destinée à afficher le contenu.

4. Dispositif électronique (100) selon la revendication 1, ladite mémoire (170) étant en outre configurée pour stocker des instructions qui commandent d'identifier un premier contenu affiché sur le premier dispositif d'affichage (151), et d'afficher, sur le second dispositif d'affichage (153), un second contenu associé au premier contenu affiché sur le premier dispositif d'affichage (151).

5. Dispositif électronique (100) selon la revendication 1, ladite mémoire (170) étant en outre configurée pour stocker des instructions qui détectent une zone de préhension à partir d'un bord d'au moins l'un du premier dispositif d'affichage (151) et du second dispositif d'affichage (153) durant un mouvement du dispositif électronique (100), et déterminer un contenu à afficher sur le second dispositif d'affichage (153) sur la base d'une position de la zone de préhension.

6. Dispositif électronique (100) selon la revendication 1, ladite mémoire (170) étant en outre configurée pour stocker des instructions qui commandent de détecter un événement de notification, de déterminer un premier contenu à afficher sur le premier dispositif d'affichage (151) sur la base de l'événement de notification, et d'afficher le premier contenu sur le premier dispositif d'affichage (151).

7. Dispositif électronique (100) selon la revendication 1, ladite mémoire (170) étant en outre configurée pour stocker des instructions qui commandent d'afficher l'un quelconque des éléments principaux de fonctions prédéfinies sur le second dispositif d'affichage (153), de détecter une entrée utilisateur pour le défilement des éléments principaux, et de faire défiler les éléments principaux sur la base de l'entrée utilisateur et d'afficher un autre élément des éléments principaux sur le second dispositif d'affichage (153).

8. Dispositif électronique (100) selon la revendication 1, ladite mémoire (170) étant en outre configurée pour stocker des instructions qui commandent de détecter une entrée d'utilisateur concernant le contenu affiché sur le second dispositif d'affichage (153), de détecter que la direction du premier dispositif d'affichage (151) est changée de la seconde direction à la première direction sur la base d'un mouvement du dispositif électronique (100), et, en réponse au changement de direction du premier dispositif d'affichage (151) de la seconde direction à la première direction, d'afficher, sur le premier dispositif d'affichage (151), un contenu indiquant un résultat de l'entrée utilisateur concernant le contenu affiché sur le second dispositif d'affichage (153).

9. Procédé d'un dispositif électronique (100) comprenant un premier dispositif d'affichage (151) orienté selon une première direction, et un second dispositif d'affichage (153) disposé sur une surface arrière du premier dispositif d'affichage et orienté selon une seconde direction, le procédé comprenant :
en réponse à la détection (711) d'une première position du dispositif électronique (100) que le premier dispositif d'affichage (151) est orienté selon la première direction et le second dispositif d'affichage (153) est orienté selon la seconde direction, l'affichage (819) d'un contenu sur le premier dispositif d'affichage (151) ;
la détermination (713) pour savoir si une direction du premier dispositif d'affichage (151) est changée de la première direction à la seconde direction, sur la base d'un mouvement du dispositif électronique (100) ; et
en réponse à la détermination que la direction du premier dispositif d'affichage (151) est changée de la première direction à la seconde direction, l'affichage (715) du contenu sur le second dispositif d'affichage (153).

10. Procédé selon la revendication 9, ledit affichage du contenu sur le second dispositif d'affichage (153) comprenant :
la détermination d'une partie du second dispositif d'affichage (153) en tant que zone de préhension ; et
la détermination d'une autre zone à l'exception de la zone de préhension sur le second dispositif d'affichage (153) en tant que zone d'affichage destinée à afficher le contenu.

11. Procédé selon la revendication 9, ledit affichage du contenu sur le second dispositif d'affichage (153) comprenant :
l'identification d'un premier contenu affiché sur le premier dispositif d'affichage (151) ; et
l'affichage, sur le second dispositif d'affichage (153), d'un second contenu associé au premier contenu affiché sur le premier dispositif d'affichage (151).

12. Procédé selon la revendication 9, ledit affichage du contenu sur le second dispositif d'affichage (153) comprenant :
la détection d'une zone de préhension à partir d'un bord d'au moins l'un du premier dispositif d'affichage (151) et du second dispositif d'affichage (153) durant un mouvement du dispositif électronique (100) ; et
la détermination d'un contenu à afficher sur le second dispositif d'affichage (153) sur la base d'une position de la zone de préhension.

13. Procédé selon la revendication 9, ladite détermination du premier dispositif d'affichage (151) orienté selon la première direction et du second dispositif d'affichage (153) disposé sur la surface arrière du premier dispositif d'affichage (151) comprenant en outre :
la détection d'un événement de notification ;
la détermination d'un premier contenu à afficher sur le premier dispositif d'affichage (151) sur la base de l'événement de notification ; et
l'affichage du premier contenu sur le premier dispositif d'affichage (151).

14. Procédé selon la revendication 9, ledit affichage du contenu sur le second dispositif d'affichage (153) comprenant :
l'affichage de l'un quelconque des éléments principaux de fonctions prédéfinies sur le second dispositif d'affichage (153) ;
la détection d'une entrée utilisateur pour faire défiler les éléments principaux ; et
le défilement des éléments principaux sur la base de l'entrée utilisateur et l'affichage d'un autre élément des éléments principaux sur le second dispositif d'affichage (153).

15. Procédé selon la revendication 9, comprenant en outre :
la détection d'une entrée d'utilisateur concernant le contenu affiché sur le second dispositif d'affichage (153) ;
la détection que la direction du premier dispositif d'affichage (151) est changée de la seconde direction à la première direction sur la base d'un mouvement du dispositif électronique (100) ; et
en réponse au changement de direction du premier dispositif d'affichage (151) de la seconde direction à la première direction, l'affichage, sur le premier dispositif d'affichage (151), d'un contenu indiquant un résultat de l'entrée utilisateur concernant le contenu affiché sur le second dispositif d'affichage (153).
